# EUROPÄISCHE PATENTSCHRIFT

(11) **EP 2 058 148 B1**
(45) Veröffentlichungstag und Bekanntmachung des Hinweises auf die Patenterteilung: **29.09.2010**
(21) Anmeldenummer: 08019551.4
(22) Anmeldetag: 07.11.2008
(51) Int. Cl.: B60C 23/00

(54) **Reifendruckregelanlage und Verfahren zur Regelung des Reifendrucks**
Tyre pressure control device and method for controlling the tyre pressure
Installation de réglage de la pression des pneus et procédé de réglage de la pression des pneus

(30) Priorität: 08.11.2007 DE 102007053260
(43) Veröffentlichungstag der Anmeldung: 13.05.2009
(73) Patentinhaber: Müller, Klaus, 63654 Büdingen (DE)
(72) Erfinder: Müller, Klaus, 63654 Büdingen (DE)

(56) Entgegenhaltungen:
- EP-A- 1 371 506
- US-A- 6 098 682

## Beschreibung

Das Fahrverhalten eines Kraftfahrzeugs und gegebenenfalls auch das eines Anhängers hängen entscheidend auch von den Reifenfülldrücken ab. Jeder gewählte Reifenfülldruck ist im Grunde genommen ein Kompromiss beispielsweise zu Gunsten oder zu Lasten des Handlings, des Komforts oder der möglichen Traktion. Die Reifenfülldrücke können aber auch die Fahrsicherheit oder die Wirtschaftlichkeit eines Fahrzeugs beeinflussen. Unterschiedliche Beladungszustände, Geschwindigkeiten und Fahrbahnbeschaffenheiten erfordern für optimales Fahr- und Verschleißverhalten entsprechend angepasste Reifenfülldrücke. Es wäre wünschenswert, die Reifenfülldrücke vom Fahrzeug aus, dabei auch während der Fahrt, verändern zu können.

Bei Nutzfahrzeugen mit mehreren Achsen und mit stark unterschiedlichen möglichen Gewichten kommen häufig sog. Liftachsen zum Einsatz. Dadurch kann die Zahl der wirksamen Achsen dem Beladungszustand angepasst werden. Reifenverschleiß, Wirtschaftlichkeit des Fahrzeugs und Fahrverhalten im Leerzustand lassen sich verbessern, indem man eine oder sogar mehrere Achsen anhebt.

Nutzfahrzeuge verfügen sehr häufig auch über zwillingsbereifte Achsen. Bei Leerfahrten mit einem solchen Fahrzeug wäre es oftmals völlig ausreichend und gleichzeitig von Vorteil, wenn bei einer zwillingsbereiften Achse nur die äußeren Reifen "zum Tragen" kämen. Würde man beispielsweise auf die inneren Felgen einer zwillingsbereiften Achse sog. Faltreifen montieren, die sich bei Verlust ihres Füllmittels selbsttätig zusammenfalten, so könnte man die Zahl der wirksamen Reifen dem Beladungszustand eines solchen Fahrzeugs anpassen. Besonders vorteilhaft wäre es, wenn diese Anpassung vom Fahrzeug aus und eventuell auch während der Fahrt geschehen könnte.

Die Erfindung betrifft eine Reifendruckregelanlage gemäß den Merkmalen des ersten Hauptanspruchs. Ferner betrifft die Erfindung ein Verfahren zur Regelung des Reifendrucks gemäß den Merkmalen des ersten Verfahrensanspruchs.

### Stand der Technik

Gattungsbildende Reifendruckregelanlagen mit zentraler Druckquelle nach dem Einleitungsprinzip, d.h. die Versorgungsleitung ist gleichzeitig Steuerleitung für ein Radventil, sind bekannt (z.B.: DE 32 46 601 A1, DE 32 47 371 A1, US 6 098 682). Als Vorteil solcher Anlagen kann man die in Neutralstellung entlüfteten Versorgungsleitungen und damit einhergehend druckentlastete Rotorverbindungen nennen. Die bekannten Anlagen verfügen über eine Druckquelle, in der Regel bestehend aus Verdichter, Druckregler und Vorratsbehälter. Zu den Reifen führen Versorgungsleitungen, in deren Verlauf Steuerventile und Rotorverbindungen angeordnet sind. Am Rad, also am rotierenden Teil der Anlage, sind dann noch druckgesteuerte Radventile vorgesehen.

Die Anlage gemäß DE 32 46 601 A1 verwendet Druckstöße, um damit spezielle Radventile zu öffnen und später auch wieder zu schließen. Das Niveau der Druckstöße liegt dabei über dem Druckniveau, mit dem die Reifen befüllt werden. Am Ende eines Füll- oder Ablassvorgangs sind die Versorgungsleitungen wieder entlüftet.

Bei den Anlagen, wie sie in DE 32 47 371 und US 6 098 682 beschrieben sind, hängen die drei Funktionen der Radventile, nämlich "Absperren", "Füllen" und "Entleeren" vom aktuell anliegenden Druckniveau in der Versorgungsleitung ab. Die Anlagen müssen also mindestens drei Druckniveaus bereitstellen können, und die Radventile müssen die drei Druckniveaus erkennen können.

Eine andere technische Lösung, bekannt aus JP 2000255228 A, verwendet ein Radventil, dessen ebenfalls drei Funktionen davon abhängen, ob die Versorgungsleitung gerade druckentlastet ist (Neutralstellung) oder ob Überdruck (Füllen) oder aber Unterdruck (Entleeren) angelegt ist.

Eine derartig ausgebildete Einrichtung ist auch aus DE 34 05 111 C2 bekannt. Zwei zu regelnde Reifen sind über je ein Radventil an eine gemeinsame Versorgungsleitung angeschlossen. Über die gemeinsame Versorgungsleitung und das Steuerventil erfolgt eine Beeinflussung der Fülldrücke dieser Reifen. Das Steuerventil generiert dafür an der Versorgungsleitung drei Druckniveaus: einen Öffnungsdruck, einen Druck, der vergleichsweise schnell reduziert wird, oder einen Druck, der vergleichsweise langsam reduziert wird. Um über eine Versorgungsleitung und ein Steuerventil eine Befüllung mehrerer Reifen vorzunehmen, wird nur eine simultane Befüllung der Reifen nahegelegt.

Aus DE 34 41 512 A1 ist ein Kraftfahrzeugrad mit einer Zwillingsbereifung auf einer gemeinsamen Felge bekannt. Jeder Reifen ist jeweils mit einer eigenen Einrichtung zur Luftdruckregelung und einer eigenen Versorgungsleitung versehen.

In der Patentanmeldung DE 10 2006 021 712.8 wird eine Reifenfüllvorrichtung beschrieben, die ein Radventil aufweist, das zwischen einer Sperrstellung und einer Durchlassstellung bewegbar und als druckgesteuertes Flip-Flop ausgebildet ist. Die Stellung des Flip-Flop-Ventils hängt dabei nicht vom in der Versorgungsleitung aktuell anliegenden Druckniveau ab, sondern von den bis dahin in der Versorgungsleitung stattgefundenen Übergängen in Form von "drucklos" zu "Druck vorhanden". Die Idee, Drucksprünge zur Steuerung von Radventilen auszunutzen, wird hier aufgegriffen und weiterentwickelt.

Ausgehend von diesem Stand der Technik liegt dem Gegenstand des Anspruchs 1 die Aufgabe zugrunde, eine Reifendruckregelanlage, die eine individuelle Beeinflussung der Fülldrücke in Reifen zulässt, mit einem möglichst einfachen, kostengünstigen und kompakten Aufbau zu realisieren. Erfindungsgemäß wird diese Aufgabe nach Anspruch 1 dadurch gelöst, indem über ein Steuerventil in einer für mehrere Reifen gemeinsamen Versorgungsleitung das Druckniveau bestimmt wird, wobei lediglich zwischen den Zuständen "drucklos" und "Druck vorhanden" unterschieden wird, und daraus resultierende Druckniveauwechsel zur Steuerung mindestens eines entsprechend konzipierten Radventils dienen. Durch diese einfache Ausgestaltung erfolgt eine individuelle Beeinflussung der Fülldrücke in Reifen.

### Vorteile der Erfindung

Das erfindungsgemäße Verfahren (Anspruch 13) zur Regelung des Reifendrucks und eine erfindungsgemäße Reifendruckregelanlage (Anspruch 1) haben den Vorteil, dass durch die Anlage auf einfachste Weise nur zwei Druckzustände bereitgestellt werden müssen, und dass zudem mehrere, pneumatisch und gegebenenfalls auch kinematisch voneinander getrennte Reifen über eine gemeinsame Versorgungsleitung und damit auch über ein gemeinsames Steuerventil individuell geregelt werden können. Der Zustand "drucklos" entspricht dabei dem natürlichen Umgebungsdruck, der sich in einer entlüfteten Versorgungsleitung einstellt, während der Zustand "Druck vorhanden" nicht unbedingt einen konkreten, festen Druckwert erfordert. Vielmehr darf sich der Druck beim Zustand "Druck vorhanden" in einem weiten Bereich bewegen, lediglich ein gewisser Mindestdruck muss eingehalten werden, damit die beiden Zustände "Druck vorhanden" und "drucklos" sicher voneinander unterschieden werden können. Natürlich ist zu beachten, dass ein zu füllender Reifen keinen höheren Druck erreichen wird als durch den Zustand "Druck vorhanden" vorgegeben.

Dadurch, dass durch die Anlage nur die Zustände "Druck vorhanden" und "drucklos" bereitgestellt werden müssen, und dadurch, dass über ein Steuerventil und eine Versorgungsleitung gleich mehrere Reifen individuell geregelt werden können, vereinfacht sich der Aufbau des stationären Teils einer solchen Reifendruckregelanlage entschieden.

Eine Reifendruckregelanlage kann zudem sehr kostengünstig aufgebaut werden, da insbesondere an die Rotorverbindungen keine allzu hohen Ansprüche gestellt werden. Die Anlage würde auch dann noch zufriedenstellend arbeiten, falls die als kritische Bauteile geltenden Rotorverbindungen etwa kleine Undichtigkeiten aufweisen sollten. Auch der rotierende Teil der Reifendruckregelanlage lässt sich preisgünstig realisieren, denn je nach gewählter Ausführungsform (Variante) kann für die druckgesteuerten Radventile auf konventionelle Ventileinheiten zurückgegriffen werden.

### Zeichnungen

Ausführungsbeispiele der Erfindung sind in den Zeichnungen dargestellt.

Fig.1 zeigt eine Reifendruckregelanlage in schematischer Darstellung.

In den Fig.2 bis 5 ist jeweils ein Zwillingsradpaar mit Radventilen in verschiedenen Varianten dargestellt.

In den Fig.6 bis 12 sind zeitliche Druckverläufe (Druckwechselspiele) dargestellt.

Fig.13 zeigt eine Reifendruckregelanlage mit Schnellentlüftung in schematischer Darstellung.

### Beschreibung der Ausführungsbeispiele

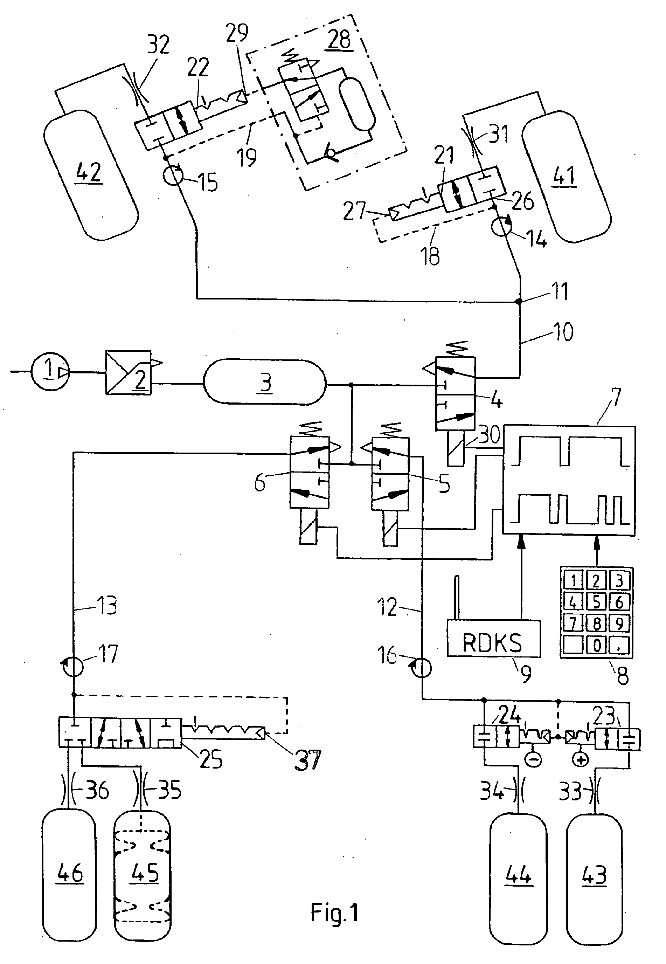

Bei der in Fig.1 schematisch dargestellten Reifendruckregelanlage ist ein Fahrwerkskonzept mit einzelbereifter Vorderachse und zwillingsbereifter Hinterachse, typisch für ein Nutzfahrzeug, zugrunde gelegt. Die sechs dargestellten Reifen werden dabei über insgesamt drei Steuerventile und entsprechend drei Versorgungsleitungen individuell geregelt. Für jedes Reifenpaar, das über eine gemeinsame Leitung geregelt wird, ist in Fig.1 zur Demonstration eine andere technische Lösung dargestellt. Natürlich lassen sich innerhalb einer Anlage verschiedene Varianten kombinieren, in der Regel wird man sich jedoch, anders als hier gezeichnet, zumindest an einer Achse für eine einheitliche Ausführungsform entscheiden.

Die Reifendruckregelanlage in Fig.1 ist mit all ihren Ventilen in Neutralstellung dargestellt. Im oberen Teil der Zeichnung ist die einzelbereifte Vorderachse schematisch dargestellt, während der untere Teil der Zeichnung die zwillingsbereifte Hinterachse symbolisiert. Die Anlage weist einen Verdichter 1 auf, der über einen Druckregler 2 einen Vorratsbehälter 3 z. B. mit Druckluft, denkbar wäre jedoch auch ein anderes Medium, versorgt. Vom Vorratsbehälter führen Druckleitungen zu drei 3/2-Wege-Magnetventilen 4, 5 und 6, welche als elektrisch ansprechbare Steuerventile fungieren.

Das 3/2-Wege-Magnetventil bzw. Steuerventil 4 ist für die Vorderachse zuständig. Von ihm führt eine Versorgungsleitung 10, welche sich in ihrem weiteren Verlauf am Knotenpunkt 11 teilt, zu den Rotor- oder Drehverbindungen 14 und 15 der einzelnen Räder der Vorderachse. In der Neutralstellung ist die Versorgungsleitung 10 über das Steuerventil 4 entlüftet, damit sind die Rotorverbindungen 14 und 15 druckentlastet. An der Vorderachse verfügt jedes Rad über ein eigenes, separates Radventil 21 bzw. 22. Die Radventile sind über die Drosselstellen 31 bzw. 32 mit den einzelnen Reifen 41 bzw. 42 verbunden. Das Radventil 22 des linken Vorderrades soll baugleich mit dem Radventil 21 des rechten Vorderrades sein.

Beide Radventile sind als sog. pneumatische Flip-Flops ausgebildet, d.h. sie weisen einen Steuereingang 27 bzw. 29 zur pneumatischen Steuerung auf und verfügen über zwei Funktionsstellungen, nämlich eine Sperrstellung als Neutralstellung und eine Durchlassstellung sozusagen als Arbeitsstellung. Ein solches Radventil wechselt seine Stellung beispielsweise immer dann, wenn an seinem Steuereingang ein Übergang von "drucklos" zu "Druck vorhanden" erfolgt (schaltend bei positivem Drucksprung, oder kurz gesagt: positiv schaltend). Die Radventile können jedoch auch so ausgeführt sein, dass sie immer dann ihre Stellung wechseln, wenn an ihren Steuereingängen ein Übergang von "Druck vorhanden" zu "drucklos" erfolgt (negativ schaltend). Bei der Reifendruckregelanlage nach Fig.1 kommt es prinzipiell nicht darauf an, ob die beiden Radventile 21 und 22 ein positiv schaltendes Verhalten aufweisen oder ob sie beide negativ schaltend sind. Das Füllverhalten der Anlage ändert sich allerdings schon, je nachdem, ob die beiden Radventile 21 und 22 ein positiv schaltendes oder aber ein negativ schaltendes Verhalten aufweisen. Die weitere Beschreibung geht davon aus, dass die beiden Radventile 21 und 22 ein positiv schaltendes Verhalten aufweisen.

Der Steuereingang 27 des Radventils 21 für das rechte Vorderrad ist über die Steuerleitung 18 direkt mit dem Funktionsanschluss 26 des Radventils verbunden, welcher über die Rotorverbindung 14 und den Knotenpunkt 11 mit der Versorgungsleitung 10 verbunden ist. Damit steht der Steuereingang 27 des Radventils 21 in Wirkverbindung mit der Versorgungsleitung 10. Wäre der Steuereingang 29 des Radventils 22 für das linke Vorderrad ebenso direkt über die Steuerleitung 19 mit der Rotorverbindung 15 verbunden, so könnte man über das Steuerventil 4 keine gezielte Druckerhöhung in nur einem der Reifen 41 oder 42 durchführen, denn die baugleichen Radventile 21 und 22 würden, beide ausgehend von der Neutralstellung, auch zu jedem späteren Zeitpunkt gleiche Stellungen einnehmen. Deshalb ist in Fig.1 dem Steuereingang 29 des Radventils 22 ein sog. Druckinverter 28 vorgeschaltet. Der Druckinverter 28 bewirkt, dass der Steuereingang 29 entlüftet, also drucklos ist, wenn die Steuerleitung 19 unter Druck steht, und umgekehrt steht der Steuereingang 29 genau dann unter Druck, wenn die Versorgungsleitung 10 und damit auch die Steuerleitung 19 entlüftet ist. Der Druckinverter selbst kann beispielsweise aus einem Pneumatikventil, einem Rückschlagventil und einem kleinen Druckspeicher gebildet werden, so wie in Fig.1 dargestellt.

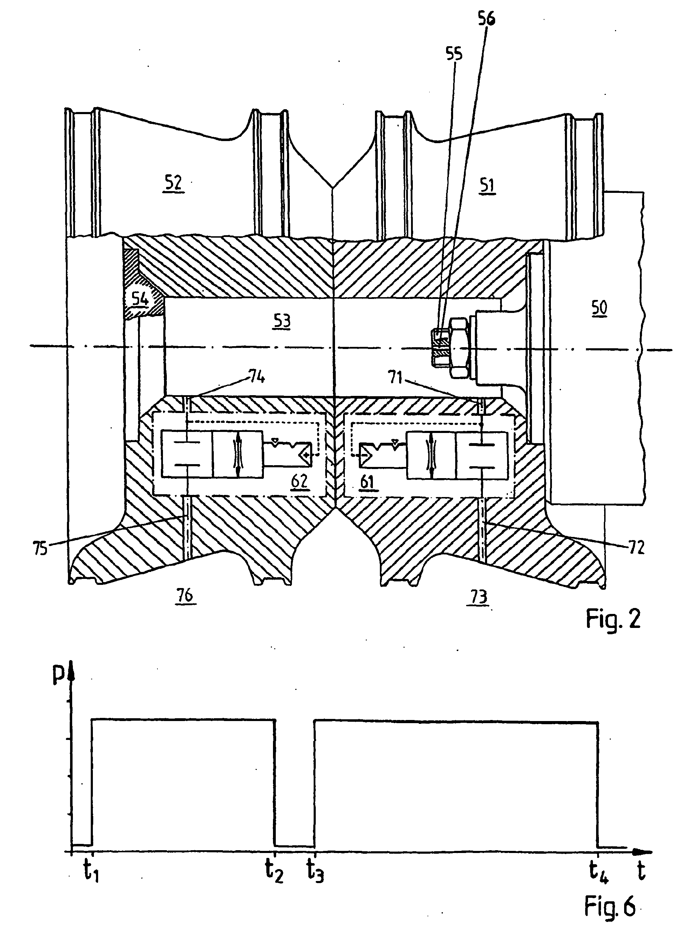

Ein Druckverlauf in der Versorgungsleitung 10, wie beispielsweise in Fig.6 dargestellt, kann durch Anlegen eines entsprechenden Spannungsverlaufs am elektrischen Steueranschluss 30 des als Magnetventil ausgeführten Steuerventils 4 erzeugt werden. Im einfachsten Fall kann ein solcher Spannungsverlauf durch einen Handtaster, ähnlich einer Morsetaste, generiert werden. In Fig.1 wird der Spannungsverlauf jedoch von einem zentralen Steuergerät 7 erzeugt, welches sozusagen als intelligenter Impulsgenerator arbeitet. Das zentrale Steuergerät 7 versorgt die einzelnen Steuerventile 4, 5 und 6 mit individuellen Impulsfolgen, die sich beispielsweise aus einem Vergleich der Zielvorgaben (gewünschte Reifendrücke) mit den tatsächlichen, aktuellen Werten ergeben. Wenn die tatsächlichen Werte mit den Zielvorgaben übereinstimmen, dann werden vom zentralen Steuergerät 7 auch keine Impulsfolgen erzeugt. Die Zielvorgaben können z. B. über ein Handeingabegerät 8 zum zentralen Steuergerät 7 geleitet werden. Es wäre jedoch auch denkbar, dass es sich bei den Zielvorgaben um fest hinterlegte Werte handelt. Die tatsächlichen, einzelnen Reifendruckwerte, also die Istdaten, können von einem Reifendruckkontrollsystem (RDKS) bereitgestellt werden. Geeignete Reifendruckkontrollsysteme sind bereits seit einiger Zeit Stand der Technik. In Fig.1 ist symbolhaft nur der Telemetriedatenempfänger 9 eines entsprechenden Reifendruckkontrollsystems dargestellt. Im Zusammenspiel mit einem vollständigen Reifendruckkontrollsystem lässt sich somit die in Fig.1 skizzierte Reifendruckregelanlage als geschlossener Regelkreis realisieren.

Der Druckverlauf wie in Fig.6 dargestellt, mit Hilfe des Steuerventils 4 der Versorgungsleitung 10 aufgezwungen, bewirkt nun folgendes: Zum Zeitpunkt t₁ reagiert das Radventil 21, es wechselt seine Stellung, geht also über in Durchlassstellung. Bis zum Zeitpunkt t₂ wird somit der Reifen 41 über das Radventil 21 und die Drosselstelle 31 gefüllt, vorausgesetzt natürlich, dass der Druck in Versorgungsleitung 10, der Vorratsdruck also, über dem Reifendruck liegt. Zum Zeitpunkt t₂, die Versorgungsleitung 10 wird gerade entlüftet, wechselt nun auch Radventil 22 seine Stellung. Radventil 21 und Radventil 22 sind nun beide in Durchgangsstellung, die beiden Reifen 41 und 42 werden sich nun über die Versorgungsleitung 10 und letztlich über das Steuerventil 4 entleeren. Die Versorgungsleitung 10 fungiert jetzt also als Rückströmleitung. Die Drosselstellen 31 bzw. 32 sorgen dafür, dass dieses Entleeren langsam erfolgt und dass die Versorgungsleitung 10 und damit auch die Steuerleitungen 18 und 19 beim Entleeren annähernd drucklos bleiben, somit kann durch die Reifendrücke kein Einfluss auf die Steuerung der Radventile erfolgen. Zum Zeitpunkt t₃ in Fig.6 schaltet das Radventil 21 wieder in die Sperrstellung zurück, das Radventil 22 bleibt jedoch in Durchgangsstellung. Von nun an wird also ausschließlich der Reifen 42 gefüllt, und zwar solange, bis zum Zeitpunkt t₄ der Druck in der Versorgungsleitung 10 wieder weggenommen wird. Zum Zeitpunkt t₄ wechselt nun auch das Radventil 22 wieder in seine Sperrstellung. Die Ausgangsstellung, d.h. die Neutralstellung wie in Fig.1 dargestellt, ist wieder hergestellt. Der Reifendruckänderungsvorgang ist beendet.

Das 3/2-Wege-Magnetventil bzw. Steuerventil 5 in Fig.1 ist für die beiden rechten Reifen 43 und 44 der zwillingsbereiften Hinterachse zuständig. Auch hier ist jedem Rad und damit jedem Reifen ein eigenes, separates Radventil zugeordnet, und auch hier sind die beiden Radventile 23 und 24 als pneumatische Flip-Flops mit je einer Sperr- und je einer Durchlassstellung ausgebildet. Im Gegensatz zur Vorderachse, wo zwei identische Radventile verwendet werden, unterscheiden sich die beiden Radventile 23 und 24 allerdings in ihrem konstruktiven Aufbau. Die beiden Vorzeichen "+" und "-", mit denen sie in Fig.1 markiert sind, sollen auf den konstruktiven Unterschied hinweisen. Das Radventil 23 ist positiv schaltend, es wechselt also immer dann seine Stellung, wenn an seinem Steuereingang ein Übergang von "drucklos" zu "Druck vorhanden" stattfindet. Das Radventil 24 ist hingegen so konstruiert, dass es immer dann seine Stellung wechselt, wenn an seinem Steuereingang ein Übergang von "Druck vorhanden" zu "drucklos" erfolgt. Das Radventil 24 ist also negativ schaltend.

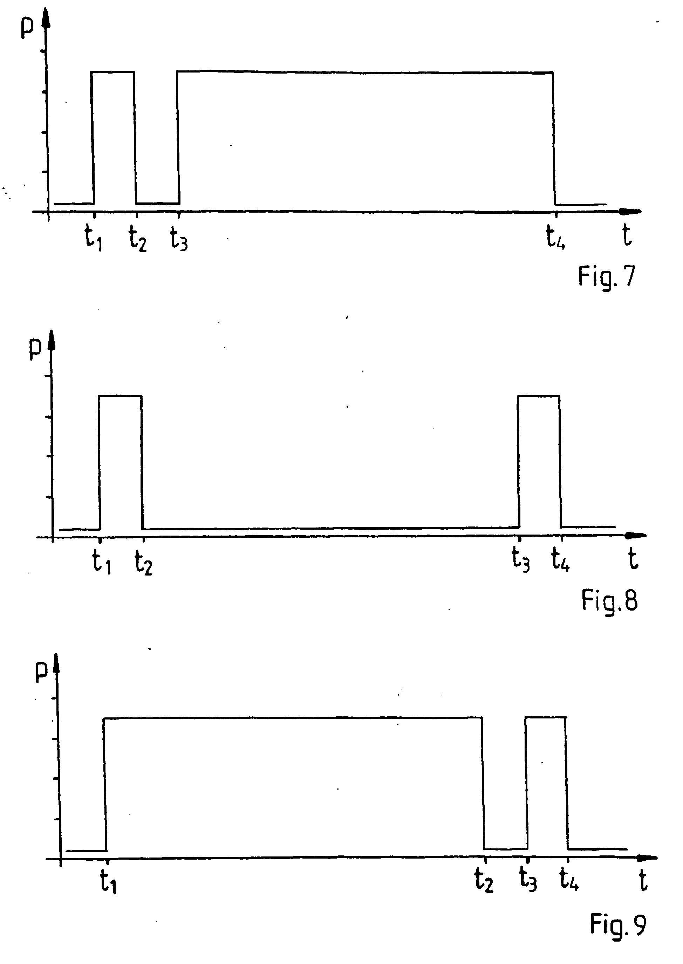

Vom Steuerventil 5 führt eine Versorgungsleitung 12 zur Rotorverbindung 16. Erst nach der Rotorverbindung verzweigt sich die Versorgungsleitung und führt zu den beiden Radventilen 23 und 24. Auch die Steuereingänge der beiden Radventile 23 und 24 stehen in Wirkverbindung mit der Versorgungsleitung 12. Zwischen den Radventilen und den Reifen befinden sich noch die Drosselstellen 33 und 34. Damit lassen sich die Reifen 43 und 44 nach dem gleichen Schema, wie es bereits für die Vorderachse erläutert wurde, füllen und auch entleeren. Beispielsweise würde der in Fig.7 dargestellte Druckverlauf, angewendet auf die Versorgungsleitung 12 und ausgehend von der Neutralstellung, im Ergebnis zu einem Füllen des inneren Reifens, also zu einer Druckerhöhung in Reifen 44 führen. Dagegen würde der in Fig.9 dargestellte Druckverlauf im Ergebnis zu einem Füllen des äußeren Reifens, also zu einer Druckerhöhung in Reifen 43, führen.

Das in Fig.8 dargestellte Druckwechselspiel würde, angewendet auf die Versorgungsleitung 12, im Ergebnis zu einer Druckabsenkung führen, und zwar in beiden Reifen 43 und 44. Ebenso würden die beiden Reifen 41 und 42 der Vorderachse im Ergebnis eine Druckabsenkung erfahren, wenn der in Fig.8 skizzierte Druckverlauf auf die Versorgungsleitung 10 angewendet würde.

Das 3/2-Wege-Magnetventil bzw. Steuerventil 6 in Fig.1 ist für die beiden linken Reifen 45 und 46 der zwillingsbereiften Hinterachse zuständig. Von ihm aus führt eine Versorgungsleitung 13 über eine Rotorverbindung 17 zu einem speziellen Radventil 25, welches man auch als Radgruppenventil 25 bezeichnen kann, von wo aus über die Drosselstellen 35 und 36 je eine Verbindung zu den einzelnen Reifen 45 und 46 besteht. Dabei ist denkbar, dass einer der Reifen, beispielsweise der innere Reifen 45, als Faltreifen ausgebildet ist, der im drucklosen Zustand auf einen kleineren Durchmesser zusammenschrumpfen würde. In Fig.1 ist dies durch eine zusätzliche gestrichelte Kontur bei Reifen 45 angedeutet. Bei dem speziellen Radgruppenventil 25 kann es sich um ein 3/4-Wege-Ventil mit zusätzlichem pneumatischen Steueranschluss 37 handeln, das derart pneumatisch steuerbar ist, dass es bei jedem Übergang von "drucklos" zu "Druck vorhanden", den es an seinem Steuereingang 37 erfährt, von einer Funktionsstellung in die nächste weiterschaltet (positiv schaltend), dabei ein zyklisches Verhalten aufweist, d.h. nach jeweils vier Übergängen von "drucklos" zu "Druck vorhanden" ist die ursprüngliche Funktionsstellung wieder hergestellt. Die im Prinzip gleichen Ziele können aber auch mit einem negativ schaltenden Radventil 25 erreicht werden. Die folgende Beschreibung geht allerdings davon aus, dass das Radgruppenventil 25 ein positiv schaltendes Verhalten aufweist. Bei den vier Funktionsstellungen des Radgruppenventils 25 handelt es sich im einzelnen um eine Sperrstellung und sozusagen drei Arbeitsstellungen. In der Sperrstellung sind beide Reifen und die Versorgungsleitung abgesperrt, somit auch pneumatisch voneinander getrennt. Die Sperrstellung kann auch als Neutralstellung bezeichnet werden. In der ersten Arbeitsstellung wird eine Verbindung zwischen der Versorgungsleitung 13 und dem äußeren Reifen 46 hergestellt, während der innere Reifen 45 abgesperrt bleibt. In der darauf folgenden zweiten Arbeitsstellung ist der innere Reifen 45 mit der Versorgungsleitung 13 verbunden, während der äußere Reifen 46 abgesperrt ist. Schließlich sind in der dritten Arbeitsstellung die beiden Reifen 45 und 46 miteinander verbunden, während die Versorgungsleitung abgesperrt ist.

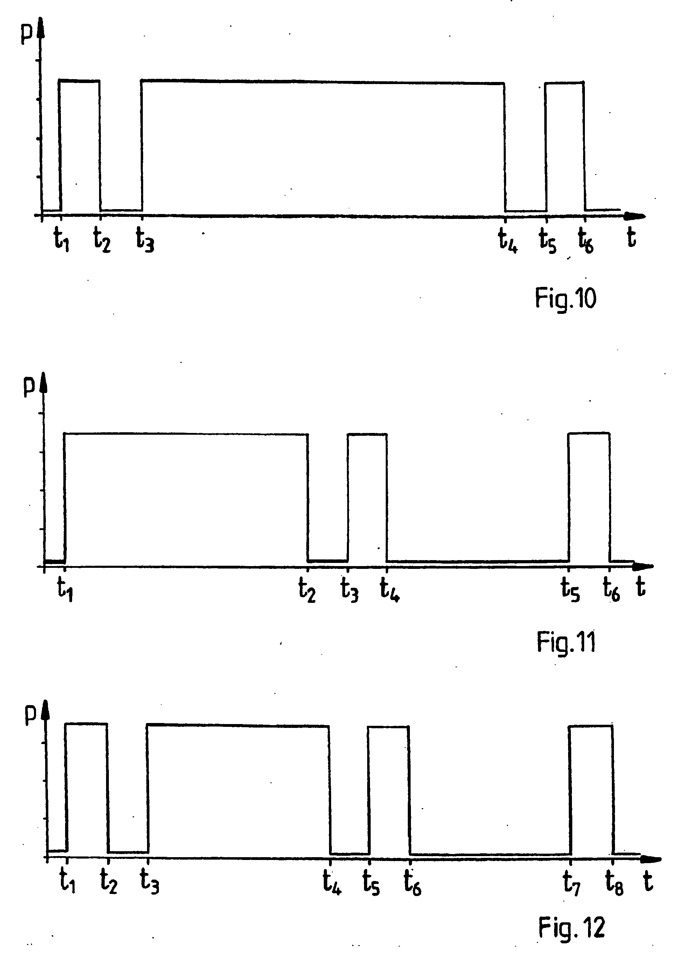

Ein Druckverlauf bzw. Druckwechselspiel in der Versorgungsleitung 13, wie beispielsweise in Fig.12 dargestellt, führt, von der Neutralstellung ausgehend, im einzelnen zu folgenden Auswirkungen: Zum Zeitpunkt t₁ schaltet das Radgruppenventil 25 eine Funktionsstellung weiter, sozusagen in seine erste Arbeitsstellung, und der äußere Reifen 46 wird sogleich befüllt. Ab dem Zeitpunkt t₂ erfolgt eine Druckabsenkung im äußeren Reifen 46, und zwar solange, bis zum Zeitpunkt t₃ das Radgruppenventil erneut weiterschaltet in seine nächste, dritte Funktionsstellung (zweite Arbeitsstellung). Ab jetzt steht der innere Reifen 45 mit der Versorgungsleitung 13 in Wirkverbindung, jedoch nur solange, bis zum Zeitpunkt t₅ das Radgruppenventil nochmals weiterschaltet in seine vierte Funktionsstellung. In dieser vierten Funktionsstellung werden beide Reifen 45 und 46 pneumatisch miteinander verbunden, gleichzeitig jedoch von der Versorgungsleitung 13 getrennt. Auf diese Weise kann nun, falls gewünscht, allmählich ein Druckausgleich zwischen den beiden Reifen 45 und 46 stattfinden. Nachdem dies erfolgt ist, sollte jedoch in die ursprüngliche Neutralstellung weitergeschaltet werden, was zum Zeitpunkt t₇ geschieht. Aus Gründen der Pannensicherheit sollten die beiden Reifen 45 und 46 nicht auf Dauer pneumatisch miteinander verbunden sein. Zum Zeitpunkt t₈ wird die Versorgungsleitung 13 wieder dauerhaft entlüftet. Neutralstellung und Neutralzustand sind damit wieder hergestellt, der Reifendruckänderungsvorgang ist abgeschlossen.

Hierzu ein praktisches Beispiel: In einer Ausgangssituation sei Reifen 46 gefüllt, während Reifen 45 drucklos sei. Das Ziel bestehe nun darin, auch Reifen 45 zu füllen, also aufzupumpen, und im Endeffekt sollen beide Reifen in etwa das gleiche Druckniveau aufweisen. Diese Aufgabe könnte beispielsweise mit dem in Fig.12 skizzierten Druckverlauf gelöst werden, der auf die Versorgungsleitung 13 angewendet werden müsste.

In Fig.2 ist ein Zwillingsradpaar dargestellt, bestehend aus einem inneren Rad 51 und einem äußeren Rad 52. Die beiden Radventile 61 und 62 sind jeweils in ihrem zugehörigen Rad enthalten. In der Abbildung rechts ist der Radträger 50 erkennbar, z. B. eine Bremstrommel. Radbefestigungselemente und Reifen sind nicht dargestellt. Durch die Räder wird eine Hohlnabe 53 gebildet, die durch einen Deckel 54 nach außen verschlossen ist. Damit stellt die Hohlnabe einen großvolumigen Verzweigungspunkt einer Druckleitung dar, und es brauchen keine Druckleitungen innerhalb der Nabe verlegt zu werden. Beispielsweise über eine axiale Bohrung 56 im Befestigungszapfen 55 für den Radträger kann die Verbindung von der Hohlnabe 53 zur nicht dargestellten Rotorverbindung erfolgen. Die Radventile 61 und 62 sind über Bohrungen 71 bzw. 74 mit der Hohlnabe verbunden, über die weiteren Bohrungen 72 bzw. 75 sind sie mit den Reifeninnenräumen 73 bzw. 76 verbunden. Bei den beiden Radventilen 61 und 62 handelt es sich um pneumatische Flip-Flops, wie sie bereits beschrieben wurden, jedoch mit dem Unterschied, dass die ebenfalls bereits erwähnten Drosselstellen in die Radventile integriert sind. Das Radventil 62 wechselt immer dann seine Stellung, wenn an seinem Steuereingang ein Übergang von "drucklos" zu "Druck vorhanden" stattfindet, während das andere Radventil 61 immer dann seine Stellung wechselt, wenn an seinem Steuereingang ein Übergang von "Druck vorhanden" zu "drucklos" erfolgt. Die beiden Vorzeichen in der Zeichnung Fig.2 (+ und -) an den Steuereingängen der Radventile sollen auf den Unterschied hinweisen.

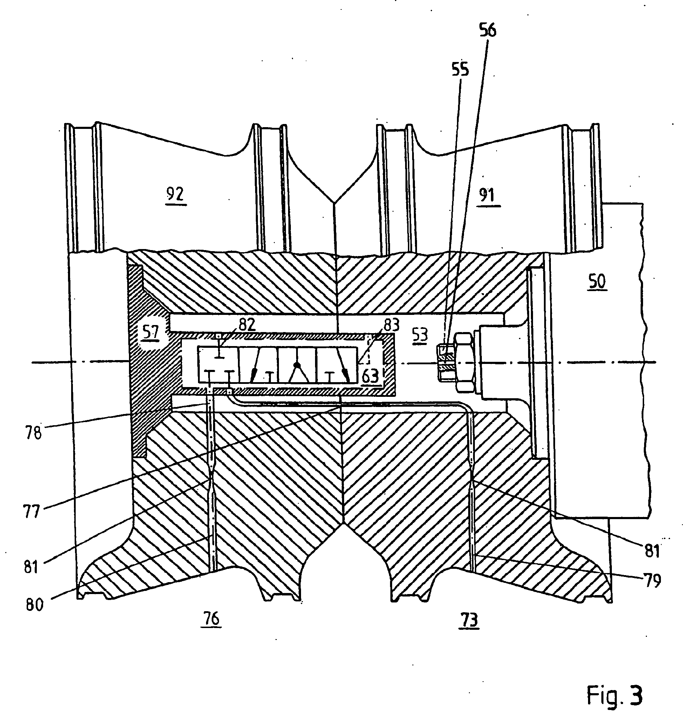

In Fig.3 ist ebenfalls ein Zwillingsradpaar dargestellt, das ein inneres Rad 91 und ein äußeres Rad 92 aufweist, ähnlich wie in Fig.2. Im Gegensatz jedoch zu Fig.2, wo jedes Rad über ein eigenes, separates Radventil verfügt, wird in Fig.3 ein gemeinsames, spezielles Radventil 63 (Radgruppenventil) verwendet, welches als 3/4-Wege-Ventil mit zusätzlichem pneumatischen Steueranschluss 83 derart ausgebildet ist, dass es bei jedem Drucksprung, den es an seinem Steuereingang 83 registriert, von einer Funktionsstellung in die nächste weiterschaltet. Es wechselt also sowohl bei einem Übergang von "drucklos" zu "Druck vorhanden" als auch bei den Übergängen von "Druck vorhanden" zu "drucklos" jeweils von einer Funktionsstellung in die nächste und weist dabei ein zyklisches Verhalten auf, d.h. nach zwei Druckimpulsen an seinem Steuereingang 83, also nach vier entsprechenden Drucksprüngen, ist die ursprüngliche Stellung wieder hergestellt. Das Radgruppenventil 63 ist in Fig.3 fest mit dem Deckel 57 verbunden, welcher die Hohlnabe 53 nach außen abschließt und hier einen in die Hohlnabe hineinragenden Zapfen bildet. Die Hohlnabe 53 stellt dabei die Verzweigung von der axialen Bohrung 56 zum Anschluss 82 des 3/4-Wege-Ventils 63 sowie zu seinem Steuereingang 83 dar. Über die gesonderten Druckleitungen 77 bzw. 78 wird jeweils eine Verbindung von den beiden anderen Anschlüssen des Radgruppenventils 63 zu den Bohrungen 79 bzw. 80 hergestellt. Diese Bohrungen führen zu den Reifeninnenräumen 73 bzw. 76 und weisen dabei jeweils eine Drosselstelle 81 auf. Bei den vier Funktionsstellungen des 3/4-Wege-Ventils 63 handelt es sich um eine Sperrstellung und um drei Arbeitsstellungen. In der Sperrstellung sind beide Reifen und der Anschluss 82 des Radgruppenventils abgesperrt. Diese Stellung stellt auch die Neutralstellung dar. Das Radgruppenventil 63 ist so konstruiert, dass die Sperrstellung nur eingenommen werden kann, wenn der Steuereingang 83 drucklos ist. Wird der Steuereingang 83 mit Druck beaufschlagt, wechselt das Radgruppenventil von der Sperrstellung in seine erste Arbeitsstellung. In dieser ersten Arbeitsstellung wird eine Verbindung vom Anschluss 82 zur Druckleitung 78 hergestellt, somit ist in dieser Stellung die Hohlnabe 53 mit dem Reifeninnenraum 76 (äußerer Reifen) verbunden, während der innere Reifen abgesperrt bleibt. Sobald der Druck in der Hohlnabe 53 und damit auch im Steuereingang 83 von "Druck vorhanden" zu "drucklos" wechselt, wechselt das Radgruppenventil daraufhin in seine zweite Arbeitsstellung. In der zweiten Arbeitsstellung sind die drei Anschlüsse des 3/4-Wege-Ventils 63 über einen Knotenpunkt miteinander verbunden, d.h. die beiden nicht dargestellten Reifen mit ihren Reifeninnenräumen 76 und 73 sind nun jeweils über die Drosselstellen 81 mit der jetzt drucklosen Hohlnabe 53 verbunden. Damit das Radgruppenventil seine vierte Funktionsstellung, also seine dritte Arbeitsstellung, einnehmen kann, muss die Hohlnabe 53 erneut mit Druck beaufschlagt werden. Durch diese vierte Funktionsstellung ist die Hohlnabe 53 mit dem Reifeninnenraum 73 (innerer Reifen) verbunden, während der äußere Reifen abgesperrt ist. Wird der Druck in der Hohlnabe daraufhin wieder weggenommen, so nimmt das Radgruppenventil wieder die erste Funktionsstellung, die Sperrstellung also, ein.

Die beiden Varianten aus Fig.2 und Fig.3 unterscheiden sich durchaus signifikant, im Ergebnis arbeiten sie jedoch völlig gleich. Beispielsweise führt ein Druckverlauf in der axialen Bohrung 56, der sich in die Hohlnabe 53 fortpflanzt, wie in Fig.7 dargestellt, bei beiden Varianten im Ergebnis zu einer Druckerhöhung im Reifen des inneren Rads. Durch den ersten kurzen Druckimpuls werden zwar bei beiden Varianten zunächst die Reifen der äußeren Räder minimal gefüllt, sogleich danach wird jedoch der Fülldruck an allen Rädern leicht abgesenkt, bevor mit dem zweiten langen Druckimpuls jeweils ausschließlich der zum inneren Rad gehörende Reifen gefüllt wird. Zum Zeitpunkt t₄ ist der Reifendruckänderungsvorgang abgeschlossen.

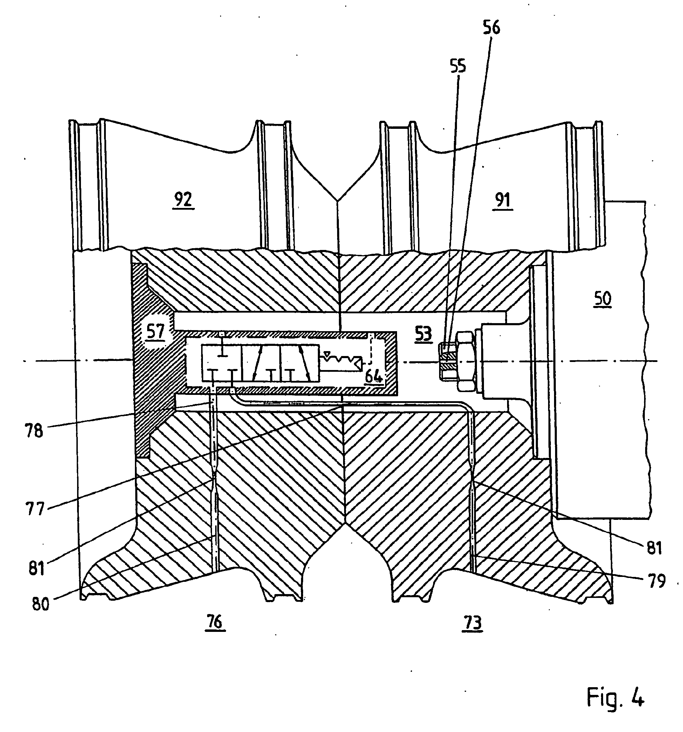

Die in Fig.4 dargestellte Variante verwendet wiederum ein gemeinsames Radventil, ein Radgruppenventil also, welches hier allerdings als 3/3-Wege-Ventil mit zusätzlichem pneumatischen Steueranschluss ausgebildet ist. Fig.4 ist identisch mit Fig.3, abgesehen von den unterschiedlichen Radventilen. Das 3/3-Wege-Ventil 64 in Fig.4 kann auf zwei verschiedene Weisen ausgeführt sein. Es kann ein positiv schaltendes Verhalten aufweisen, d.h. es wechselt immer dann von einer Funktionsstellung in die nächste, wenn an seinem Steuereingang ein Übergang von "drucklos" zu "Druck vorhanden" stattfindet. Das Radgruppenventil 64 kann aber auch negativ schaltend ausgeführt sein. Da es außerdem ein zyklisches Verhalten aufweist, hat es nach drei entsprechenden Drucksprüngen seine ursprüngliche Stellung wieder eingenommen. Bei den drei Funktionsstellungen des Radgruppenventils 64 handelt es sich um eine Sperrstellung und zwei Arbeitsstellungen. In der Sperrstellung sind alle Funktionsanschlüsse des Radgruppenventils abgesperrt, sie stellt somit die Neutralstellung dar. Durch die erste Arbeitsstellung wird eine Verbindung zwischen dem Reifeninnenraum 76 des äußeren Reifens und der Hohlnabe 53 hergestellt, der innere Reifen bleibt abgesperrt. In der zweiten Arbeitsstellung ist die Hohlnabe 53 mit dem Reifeninnenraum 73 des inneren Reifens verbunden, während der äußere Reifen abgesperrt ist. Das Radgruppenventil 64 lässt sich sozusagen als abgespeckte Version des Radgruppenventils 25 aus Fig.1 auffassen.

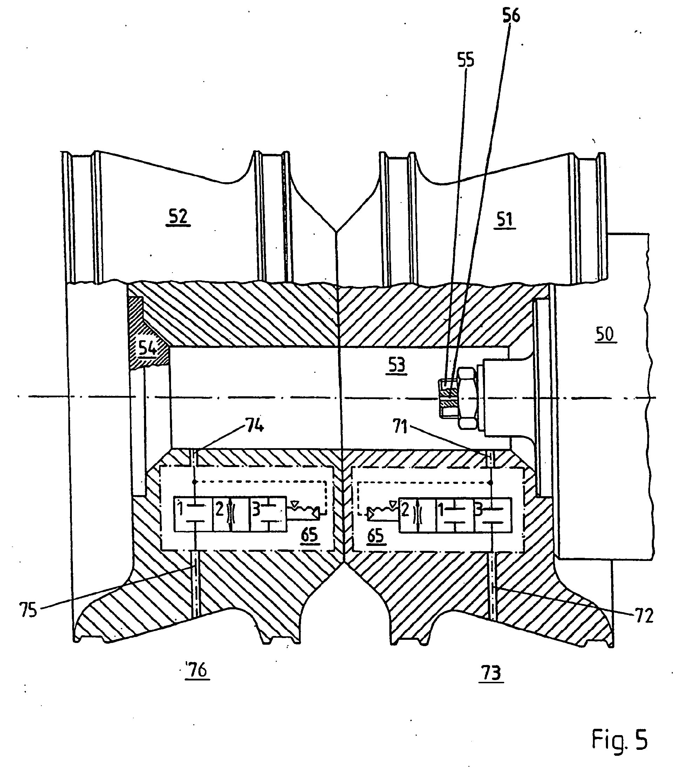

In Fig.5 ist eine weitere Variante eines Zwillingsradpaares dargestellt, wobei jedem Rad ein eigenes, separates Radventil zugeordnet ist und wobei die Radventile in den Rädern enthalten sind, so wie aus Fig.2 bekannt. Die beiden Varianten aus Fig.2 und Fig.5 unterscheiden sich nur durch ihre Radventile. Während in Fig.2 zwei Radventile verwendet werden, die einen Konstruktionsunterschied aufweisen, der sich auf ihr Steuerungsverhalten auswirkt, sind die beiden in Fig.5 dargestellten Radventile 65 vorzugsweise identisch, jedoch arbeiten sie sozusagen phasenverschoben. Bei den Radventilen 65 handelt es sich jeweils um ein 2/3-Wege-Ventil mit zusätzlichem pneumatischen Steueranschluss. Auch diese Ventile sind so ausgebildet, dass sie immer dann von einer Funktionsstellung in die nächste wechseln, wenn an ihren Steuereingängen ein Übergang von "drucklos" zu "Druck vorhanden" erfolgt (positiv schaltendes Verhalten). Alternativ können sie aber auch so konstruiert sein, dass sie ein negativ schaltendes Verhalten aufweisen. Darüber hinaus weisen sie ein zyklisches Verhalten auf, d.h. nach drei entsprechenden Drucksprüngen an ihren Steueranschlüssen ist jeweils die ursprüngliche Stellung wieder erreicht. Jedes der Radventile 65 verfügt über drei Funktionsstellungen, nämlich über zwei Sperrstellungen und eine Durchlassstellung. mit Drosselwirkung, die nacheinander eingenommen werden können. Die Drosselstellen können aber auch an anderer Stelle außerhalb der Ventile angeordnet sein. Da die Radventile phasenverschoben arbeiten, befinden sie sich nie gleichzeitig in Durchlassstellung.

Auch die beiden Varianten aus Fig.4 und Fig.5., signifikant unterschiedliche Lösungen, arbeiten im Ergebnis völlig gleich. Ein Druckwechselspiel in der axialen Bohrung 56 bzw. in der Hohlnabe 53, beispielsweise wie in Fig. 10 dargestellt, führt bei beiden Varianten, ausgehend jeweils von der skizzierten Neutralstellung und positiv schaltende Radventile vorausgesetzt, im Endeffekt zu einer Druckerhöhung im jeweils zum inneren Rad (91; 51) gehörenden Reifen. Zum Zeitpunkt t₅ schalten die Radventile 65 bzw. das Radgruppenventil 64 wieder in ihre ursprünglichen Stellungen (Neutralstellung), und ab dem Zeitpunkt t₆ ist auch der ursprüngliche Ausgangszustand mit entlüfteten Hohlnaben 53 wieder erreicht (Neutralstellung und Neutralzustand). Der Reifendruckänderungsvorgang ist damit abgeschlossen.

Der in Fig.11 dargestellte Druckverlauf würde, angewendet auf die beiden Varianten aus Fig.4 und Fig.5 und positiv schaltende Radventile annehmend, zunächst zum Füllen des jeweils äußeren Reifens führen (von t₁ bis t₂). Ab dem Zeitpunkt t₃ wäre jeweils der innere Reifen pneumatisch mit der Hohlnabe 53 verbunden, so dass sich diese inneren Reifen ab dem Zeitpunkt t₄ entleeren würden. Zum Zeitpunkt t₅ würden die Radventile 65 bzw. das Radgruppenventil 64 wieder die ursprünglichen Stellungen (Neutralstellung) einnehmen, d.h. alle Reifen wären abgesperrt. Aber erst mit dem Zeitpunkt t₆ würde schließlich auch der ursprüngliche Ausgangszustand mit entlüfteten Hohlnaben 53 wieder hergestellt sein (Neutralstellung und Neutralzustand), der Reifendruckänderungsvorgang wäre abgeschlossen.

### Schlussbemerkungen und Schnellentlüftung

Eine Reifendruckregelanlage nach dem hier beschriebenen Verfahren muss nicht völlig einheitlich ausgeführt sein. Die vorgestellten Varianten mit ihren unterschiedlichen technischen Detaillösungen lassen sich innerhalb einer Reifendruckregelanlage beliebig kombinieren. Die in Fig.2 und Fig.5 vorgestellten Lösungen, wobei jedem Rad ein separates Radventil zugeordnet ist, sind auch auf den Fall anwendbar, dass die zu regelnden Reifen mit ihren Rädern räumlich und kinematisch voneinander getrennt sind, sich also beispielsweise wie in Fig.1 rechts und links an einer einfachbereiften Achse befinden. Mit dem Lösungsprinzip, das der Variante aus Fig.5 zugrunde liegt, lassen sich auch drei oder mehr separate Reifen über eine gemeinsame Versorgungsleitung individuell regeln, indem Radventile verwendet werden, die über eine entsprechend große Anzahl von Sperrstellungen verfügen. Andererseits ist es natürlich auch möglich, an eine Versorgungsleitung nur ein einzelnes Rad mit einem Radventil und einem Reifen anzuschließen.

Auf den Aufbau der beschriebenen Radventile wird hier nicht näher eingegangen. Derartige Ventile sind bekannt bzw. mit heutiger Technik realisierbar. Die Radventile können so ausgebildet sein, dass sie die zum Wechseln der Funktionsstellungen benötigte Energie beispielsweise über ihre Steuereingänge vom Druckmittel beziehen.

Häufig wird bei Reifendruckregelanlagen der Wunsch geäußert, den Reifendruck innerhalb kürzester Zeit drastisch absenken zu können. Eine schnelle Absenkung des Reifendrucks ist mit den bisher vorgestellten Varianten jedoch ohne weiteres kaum möglich, denn das Reifenfüllmittel wird bei einer Druckabsenkung jeweils über Drosselstelle, Radventil, Rotorverbindung und Steuerventil ins Freie abgeführt. Eine erfindungsgemäße Reifendruckregelanlage lässt sich aber auch mit sog. Schnellentlüftungen ausstatten.

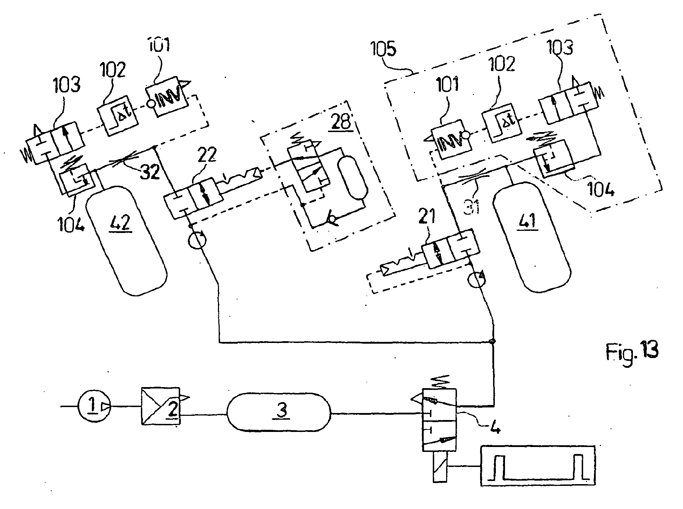

In Fig.13 ist der obere Teil der Reifendruckregelanlage aus Fig.1 noch einmal dargestellt, welcher zusätzlich mit Vorrichtungen zur Schnellentlüftung 105 versehen wurde. Die hier skizzierten Schnellentlüftungen 105 weisen jeweils einen Druckinverter 101, ein Verzögerungsglied 102, ein Pneumatikventil 103 und ein Drucksicherungsventil 104 auf. Die Pneumatikventile 103 fungieren als Schnellentlüftungsventile. Die Drucksicherungsventile 104 sollen jeweils so ausgebildet sein, dass sie bei einem kritischen Reifenmindestdruck, welcher einstellbar sein kann, schließen, ansonsten aber einen großen Öffnungsquerschnitt aufweisen. Auf diese Weise kann man den jeweiligen Reifendruck bis zum kritischen Wert schnell absenken, eine darüber hinausgehende Absenkung würde über die Drosselstellen 31 bzw. 32 und letztlich über das Steuerventil 4 langsam erfolgen. Zu diesem Zweck sollen die Druckinverter 101 so ausgebildet sein, dass sie Drücke größer als den kritischen Reifenmindestdruck an ihrem Eingang als den Zustand "Druck vorhanden" interpretieren. Die Verzögerungsglieder 102 sollen einen etwaigen Druckaufbau, der an ihren Eingängen erfolgt, um eine bestimmte Zeitspanne verzögert, beispielsweise um 1,5 sec, an ihre Ausgänge und somit an den Steuereingang des jeweiligen Pneumatikventils 103 weiterleiten. Liegt am Eingang eines Verzögerungsgliedes 102 jedoch Umgebungsdruck an (Zustand "drucklos"), so soll dieser unverzögert weitergeleitet werden. Durch diese Ausgestaltung der Verzögerungsglieder 102 wird verhindert, dass die Schnellentlüftung ungewollt während eines Füllvorganges einsetzt. Die einzelnen Bauelemente der hier skizzierten Schnellentlüftung 105 können auch zu einem Bauteil zusammengefasst werden, was besonders vorteilhaft sein kann.

Der technische Aufwand einer erfindungsgemäßen Reifendruckregelanlage mit Schnellentlüftung ist höher als der einer entsprechenden Anlage ohne Schnellentlüftung. Der technische Mehraufwand beschränkt sich aber alleine auf die Räder. Der stationäre Teil und auch die Bedienung der Anlage, also die Füll- und Absenkprozeduren, bleiben im Prinzip unverändert. Die Schnellentlüftung eignet sich sehr gut, um sie als Option oder zur Nachrüstung vorzusehen.

## Patentansprüche

1. Reifendruckregelanlage mit zentraler Druckquelle, mit Radventilen (21, 22, 23, 24, 25, 61, 62, 64, 65), Rotorverbindungen (14, 15, 16, 17), Versorgungsleitung(en) (10, 12, 13) und Steuerventil(en) (4, 5, 6), **dadurch gekennzeichnet, dass** über ein Steuerventil (4, 5, 6) und eine gemeinsame Versorgungsleitung (10, 12, 13) eine individuelle Beeinflussung der Fülldrücke von mindestens zwei Reifen (z.B. 41 und 42, 43 und 44, 45 und 46) erfolgt, indem mittels des Steuerventils in der gemeinsamen Versorgungsleitung das Druckniveau bestimmt wird, wobei lediglich zwischen den Druckniveaus "drucklos" und "Druck vorhanden" unterschieden wird, und daraus resultierende Druckniveauwechsel zur Steuerung mindestens eines entsprechend konzipierten, pneumatisch steuerbaren Radventils (21, 22, 23, 24, 25, 61, 62, 64, 65) dienen, welches immer dann von einer Funktionsstellung in eine andere wechselt, wenn an seinem Steuereingang (z.B. 27, 29, 37) ein definierter Wechsel des Druckniveaus in Form von "drucklos" zu "Druck vorhanden" erfolgt, oder welches immer dann von einer Funktionsstellung in eine andere wechselt, wenn an seinem Steuereingang ein definierter Wechsel des Druckniveaus in Form von "Druck vorhanden" zu "drucklos" erfolgt.

2. Anlage nach Anspruch 1, **dadurch gekennzeichnet, dass** die Funktionsstellungen der Radventile in festgelegter Reihenfolge nacheinander und zyklisch wiederholbar schaltbar sind.

3. Anlage nach Anspruch 1 oder 2, **dadurch gekennzeichnet, dass** im Verlauf der Zuleitungen zu den Reifeninnenräumen Drosselstellen (31, 32, 33, 34, 35, 36, 81) angeordnet sind, wobei die Drosselstellen auch in die Radventile integriert sein können.

4. Anlage nach einem oder mehreren der vorherigen Ansprüche, **dadurch gekennzeichnet, dass** Reifen, welche ein Zwillingspaar bilden, ein gemeinsames Radventil (25, 64) zugeordnet ist, wobei das gemeinsame Radventil (25) eine besondere Funktionsstellung aufweisen kann, wodurch ein Druckausgleich zwischen den beiden Zwillingsreifen (45, 46) erfolgen kann.

5. Anlage nach einem oder mehreren der Ansprüche 1 bis 3, **dadurch gekennzeichnet, dass** jedem der Reifen, deren Fülldrücke über eine gemeinsame Versorgungsleitung individuell geregelt werden sollen, ein separates Radventil (65) zugeordnet ist, welches jeweils eine Durchlassstellung und mehrfach eine Sperrstellung aufweist, wobei die Radventile (65) untereinander baugleich sein können, sich im Betrieb jedoch **dadurch** unterscheiden, dass sie ihre Funktionsstellungen untereinander phasenverschoben einnehmen.

6. Anlage nach einem oder mehreren der Ansprüche 1 bis 3, **dadurch gekennzeichnet, dass** zwei über eine gemeinsame Versorgungsleitung zu regelnden Reifen jeweils ein separates Radventil (23 und 24, 62 und 61) zugeordnet ist, die beide als pneumatische Flip-Flops ausgebildet sind, wobei das eine pneumatische Flip-Flop (23, 62) immer dann seine Stellung wechselt, wenn an seinem Steuereingang ein Übergang von "drucklos" zu "Druck vorhanden" erfolgt, während das andere pneumatische Flip-Flop (24, 61) so ausgebildet ist, dass es immer dann seine Stellung wechselt, wenn an seinem Steuereingang ein Übergang von "Druck vorhanden" zu "drucklos" erfolgt.

7. Anlage nach einem oder mehreren der Ansprüche 1 bis 3, **dadurch gekennzeichnet, dass** zwei über eine gemeinsame Versorgungsleitung zu regelnden Reifen jeweils ein separates Radventil (21 und 22) zugeordnet ist, die beide als pneumatische Flip-Flops ausgebildet sind und das gleiche Steuerungsverhalten aufweisen, wobei jedoch dem Steuereingang eines der beiden Flip-Flops ein Druckinverter (28) vorgeschaltet ist.

8. Anlage nach einem oder mehreren der vorherigen Ansprüche, **dadurch gekennzeichnet, dass** Radventile inklusive eines gegebenenfalls vorhandenen Druckinverters innerhalb der Räder (51, 52) angeordnet sind.

9. Anlage nach einem oder mehreren der vorherigen Ansprüche, **dadurch gekennzeichnet, dass** die Reifenfülldrücke mit Hilfe eines Telemetriesystems überwacht werden, wobei über das Telemetriesystems auch eine Rückmeldung über die aktuelle Funktionsstellung der Radventile erfolgen kann.

10. Anlage nach einem oder mehreren der vorherigen Ansprüche, **dadurch gekennzeichnet, dass** die Reifenfülldrücke mit Hilfe eines Telemetriesystems oder eines anderen Reifendruckkontrollsystems als Mess- oder Rechendaten bereitgestellt und an ein Steuergerät (7) weitergeleitet werden, welches automatisch über Steuerventile (4, 5, 6) Einfluss auf die Versorgungsleitungen (10, 12, 13) nimmt.

11. Anlage nach einem oder mehreren der vorherigen Ansprüche, **dadurch gekennzeichnet, dass** mindestens einer der Reifen, deren Fülldrücke über eine gemeinsame Versorgungsleitung individuell geregelt werden sollen und die ein Zwillingspaar bilden, als Faltreifen (45) ausgebildet ist.

12. Anlage nach einem oder mehreren der vorherigen Ansprüche, **dadurch gekennzeichnet, dass** Räder mit einer Vorrichtung zur Schnellentlüftung (105) versehen sind, welche verzögert einsetzt, dann jedoch ein rasches Absenken des Fülldruckes bis zu einem bestimmten Mindestdruck erlaubt, welcher einstellbar sein kann, während darüber hinausgehende Absenkungen langsam erfolgen.

13. Verfahren zur Regelung des Reifendrucks bei Reifendruckregelanlagen mit zentraler Druckquelle und vor bzw. nach einem Reifendruckänderungsvorgang druckentlasteten Rotorverbindungen (14, 15, 16, 17), **dadurch gekennzeichnet, dass** über ein Steuerventil (4, 5, 6) und eine gemeinsame Versorgungsleitung (10, 12, 13) eine individuelle Beeinflussung der Fülldrücke von mindestens zwei Reifen erfolgt, indem mittels des Steuerventils in der gemeinsamen Versorgungsleitung das Druckniveau bestimmt wird, wobei lediglich zwischen den Druckniveaus "drucklos" und "Druck vorhanden" unterschieden wird, und daraus resultierende Druckniveauwechsel zur Steuerung mindestens eines entsprechend konzipierten Radventils (21, 22, 23, 24, 25, 61, 62, 64, 65) dienen.

## Claims

1. Tyre pressure control device with central pressure source, with wheel valves (21, 22, 23, 24, 25, 61, 62, 64, 65), rotary connections (14, 15, 16, 17), supply line(s) (10, 12, 13) and control valve(s) (4, 5, 6), **characterised in that** by using one control valve (4, 5, 6) and one common supply line (10, 12, 13) an individual influence on the inside pressure levels of at least two tyres (e.g. 41 and 42, 43 and 44, 45 and 46) occurs whilst the pressure level in the common supply line will be regulated by the control valve, in doing so it will only be differentiated between the pressure levels "no pressure" and "on pressure", and so resultant alternations of the pressure level are used for the control of at least one accordingly designed pneumatically controlled wheel valve (21, 22, 23, 24, 25, 61, 62, 64, 65), which always changes from one operating position to another whenever an alternation of the pressure level defined as succession from "no pressure" to "on pressure" takes place at its control input (e.g. 27, 29, 37), or which always changes from one operating position to another whenever an alternation of the pressure level defined as succession from "on pressure" to "no pressure" takes place at its control input.

2. Device according to claim 1, **characterised in that** the operating positions of the wheel valves will be actuated in succession in a defined sequence and cyclically repeatable.

3. Device according to claim 1 or 2, **characterised in that** devices to throttle (31, 32, 33, 34, 35, 36, 81) are installed in the course of the supply lines going to the inside of the tyres, in doing so the devices to throttle can also be integrated in the wheel valves.

4. Device according to one or more of the previous claims, **characterised in that** a common wheel valve (25, 64) is attributed to twin tyres, in doing so the common wheel valve (25) can have a special operating position to equalize the pressure of the twin tyres (45, 46).

5. Device according to one or more of claims 1 to 3, **characterised in that** a separate wheel valve (65) is attributed to each one of the tyres, at which the inside pressure levels will be regulated individually by a common supply line, in doing so such a separate wheel valve (65) has one opening position and several blocking positions and the wheel valves (65) can be identical in construction, however differ when operated as they take their operating positions among each other phase-delayed.

6. Device according to one or more of claims 1 to 3, **characterised in that** a separate wheel valve (23 and 24, 62 and 61) is attributed to each one of two tyres which will be regulated by a common supply line, in doing so both separate wheel valves are designed as pneumatic flip-flops, whereas the first pneumatic flip-flop (23, 62) is changing its position whenever there is a succession from "no pressure" to "on pressure" at its control input, whereas the other pneumatic flip-flop (24, 61) is designed to change its position whenever there is a succession from "on pressure" to "no pressure" at its control input.

7. Device according to one or more of claims 1 to 3, **characterised in that** a separate wheel valve (21 and 22) is attributed to each one of two tyres which will be regulated by a common supply line, in doing so both separate wheel valves are designed as pneumatic flip-flops having the same control characteristics, whereas a pressure inverter (28) is placed before the control input of one of the both flip-flops.

8. Device according to one or more of the previous claims, **characterised in that** wheel valves are installed inside of the wheels (51, 52) including a pressure inverter if existing.

9. Device according to one or more of the previous claims, **characterised in that** the inside pressure levels of the tyres will be controlled by means of a telemetry system, in doing so also a monitoring of the actual operating position of the wheel valves can occur.

10. Device according to one or more of the previous claims, **characterised in that** the inside pressure levels of the tyres will be provided as measured or calculated data by means of a telemetry or a different tyre pressure monitoring system and that the data will be transmitted to a control device (7) which automatically takes influence on the supply lines (10, 12, 13) by using control valves (4, 5, 6).

11. Device according to one or more of the previous claims, **characterised in that** at least one single of twin tyres, at which the inside pressure levels will be regulated individually by a common supply line, is designed as foldable tyre (45).

12. Device according to one or more of the previous claims, **characterised in that** wheels are equipped with a device for a quick deflation (105), which applies with delay, but then it allows a rapid lowering of the inside pressure level to a defined minimum pressure which can be adjustable, whereas a lowering going beyond will occur slowly.

13. Method for controlling the tyre pressure at tyre pressure control devices with central pressure source and rotary connections (14, 15, 16, 17) which are pressure-discharged before respectively after a tyre pressure variation process, **characterised in that** by using one control valve (4, 5, 6) and one common supply line (10, 12, 13) an individual influence occurs on the inside pressure levels of at least two tyres whilst the pressure level in the common supply line will be regulated by the control valve, in doing so it will only be differentiated between the pressure levels "no pressure" and "on pressure", and so resultant alternations of the pressure level are used for the control of at least one accordingly designed wheel valve (21, 22, 23, 24, 25, 61, 62, 64, 65).

## Revendications

1. Installation de réglage de la pression des pneus avec source de pression centrale, dotée de valves de roue (21, 22, 23, 24, 25, 61, 62, 64, 65), de connections rotatives (14, 15, 16, 17), de conduite(s) d'approvisionnement (10, 12, 13) et de valve(s) de commande (4, 5, 6); dispositif **caractérisé en ce qu'**au moyen d'une valve de commande (4, 5, 6) et d'une conduite d'approvisionnement commune (10, 12, 13) la pression intérieure d'au moins deux pneus (par exemple 41 et 42, 43 et 44, 45 et 46) est influencée individuellement, du fait que le niveau de pression de la conduite d'approvisionnement commune est déterminé par le biais de la valve de commande, différenciant ce faisant seulement entre les niveaux "sans pression" et "sous pression", de sorte à ce que les changements de niveau de pression résultants agissent par là sur la commande d'au moins une valve de roue fonctionnant de façon pneumatique (21, 22, 23, 24, 25, 61, 62, 64, 65), conçue pour commuter d'une des positions de fonction à une autre dès lors qu'à son entrée de commande (par exemple 27, 29, 37) le niveau de pression défini passe de "sans pression" à "sous pression", ou bien pour commuter d'une des positions de fonction à une autre dès lors qu'à son entrée de commande le niveau de pression défini passe de "sous pression" à "sans pression".

2. Dispositif selon la revendication 1, **caractérisé en ce que** les positions de fonction des valves de roue peuvent être réglées l'une après l'autre en un enchaînement prédéfini et en un cycle répété.

3. Dispositif selon la revendication 1 ou 2, **caractérisé en ce que** des goulots d'étranglement (31, 32, 33, 34, 35, 36, 81) sont disposés dans les conduites menant à l'intérieur des pneus, les goulots d'étranglement pouvant être intégrés aux valves de roue.

4. Dispositif selon l'une ou plusieurs des revendications précédentes, **caractérisé en ce que** des pneus jumelés disposent d'une valve de roue commune (25, 64), ce valve de roue (25) pouvant avoir une position de fonction particulière, permettant une compensation de pression entre les deux pneus jumelés (45, 46).

5. Dispositif selon l'une ou plusieurs des revendications 1 à 3, **caractérisé en ce que** chacun des pneus dont la pression de gonflage peut être régulée individuellement par une conduite d'approvisionnement commune, dispose d'une valve de roue distincte (65), elle-même dotée respectivement d'une position de passage et de multiples positions de blocage, les valves de roue (65) pouvant être de construction semblable mais cependant de fonctionnement différent, **en ce qu'**elles décalent entre elles leurs phases de position de fonction.

6. Dispositif selon l'une ou plusieurs des revendications 1 à 3, **caractérisé en ce que** deux pneus devant être réglés par une conduite d'approvisionnement commune disposent chacun d'une valve de roue distincte (23 et 24, 62 et 61), les valves étant conçues toutes deux comme des bascules bistables pneumatiques, l'une des bascules bistables pneumatiques (23, 62) changeant toujours de position lors du passage à son entrée de commande de "sans pression" à "sous pression", tandis que l'autre bascule bistable pneumatique (24, 61) change de position lorsqu'à son entrée de commande a lieu le passage de "sous pression" à "sans pression".

7. Dispositif selon l'une ou plusieurs des revendications 1 à 3, **caractérisé en ce que** deux pneus devant être réglés par une conduite d'approvisionnement commune disposent chacun d'une valve de roue distincte (21 et 22), les valves étant toutes deux conçues comme des bascules bistables pneumatiques et répondant de la même façon de commande, l'entrée de commande d'une des deux bascules bistables étant reliée cependant à un inverseur de pression (28).

8. Dispositif selon l'une ou plusieurs des revendications précédentes, **caractérisé en ce que** des valves de roue, y compris un, le cas échéant existant inverseur de pression, sont disposés à l'intérieur des roues (51, 52).

9. Dispositif selon l'une ou plusieurs des revendications précédentes, **caractérisé en ce que** le niveau de gonflage des pneus peut être surveillé à l'aide d'un système de télémétrie, système permettant aussi la réception des données actuelles sur les positions de fonction des valves de roue.

10. Dispositif selon l'une ou plusieurs des revendications précédentes, **caractérisé en ce qu'**à l'aide du système télémétrique, ou d'un autre système de contrôle de pression de pneus, les niveaux de gonflage des pneus pourront être traduit en données métriques ou informatiques et transmis à un appareil de commande (7), lequel influe automatiquement sur les conduites d'approvisionnement (10, 12, 13) par le biais des valves de commande (4, 5, 6).

11. Dispositif selon l'une ou plusieurs des revendications précédentes, **caractérisé en ce que** au moins un des pneus jumelés dont les niveaux de gonflage doivent être réglés individuellement par une conduite d'approvisionnement commune, est conçu comme pneu pliable (45).

12. Dispositif selon l'une ou plusieurs des revendications précédentes, **caractérisé en ce que** des roues sont équipées d'un système de dégonflage rapide (105) permettant après un commencement retardé, de réduire rapidement le niveau de pression jusqu'à un niveau minimum, lequel peut être prédéterminé, tandis que les baisses de niveau allant en dessous se font lentement.

13. Procédé de réglage de la pression des pneus propre aux installations de réglage de la pression des pneus, dotées d'une source de pression centrale, et de connections rotatives (14, 15, 16, 17), lesquelles ont été libérées de la pression avant or après un changement de niveau de la pression des pneus, **caractérisé en ce qu'**au moyen d'une valve de commande (4, 5, 6) et d'une conduite d'approvisionnement commune (10, 12, 13) la pression intérieure d'au moins deux pneus est influencée individuellement, du fait que le niveau de pression de la conduite d'approvisionnement commune est déterminé par le biais de la valve de commande, différenciant ce faisant seulement entre les niveaux "sans pression" et "sous pression", de sorte à ce que les changements de niveau de pression résultants agissent par là sur la commande d'au moins une valve de roue (21, 22, 23, 24, 25, 61, 62, 64, 65) conçue à cet effet.
